(19) **Europäisches Patentamt / European Patent Office / Office européen des brevets**

(11) **EP 1 292 858 B1**

(12) **FASCICULE DE BREVET EUROPEEN**

(45) Date de publication et mention
de la délivrance du brevet:
**04.04.2007 Bulletin 2007/14**

(21) Numéro de dépôt: **01945454.5**

(22) Date de dépôt: **15.06.2001**

(51) Int Cl.:
*G02F 1/29* (2006.01)    *G02B 6/42* (2006.01)
*G02F 1/1333* (2006.01)

(86) Numéro de dépôt international:
**PCT/FR2001/001874**

(87) Numéro de publication internationale:
**WO 2001/096938 (20.12.2001 Gazette 2001/51)**

(54) **AIGUILLEUR OPTIQUE A CRISTAUX LIQUIDES A COMMANDE FIABLE**

OPTISCHER FLÜSSIGKRISTALLSCHALTER MIT ZUVERLÄSSIGER STEUERUNG

LIQUID CRYSTAL OPTICAL SWITCH WITH RELIABLE CONTROL

(84) Etats contractants désignés:
**DE FR GB**

(30) Priorité: **16.06.2000 FR 0007756**

(43) Date de publication de la demande:
**19.03.2003 Bulletin 2003/12**

(73) Titulaire: **FRANCE TELECOM**
**75015 Paris (FR)**

(72) Inventeurs:
• **VINOUZE, Bruno**
**F-22710 Port Blanc (FR)**
• **WOLFFER, Nicole**
**F-22700 Saint Quay Perros (FR)**
• **LEVER, Roger**
**F-29600 Plourin-les-Morlaix (FR)**
• **GRAVEY, Philippe**
**F-22300 Lannion (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
US-A- 5 648 859      US-A- 5 699 078
US-A- 5 930 012      US-A- 5 963 682

• **PATENT ABSTRACTS OF JAPAN vol. 018, no. 339 (P-1760), 27 juin 1994 (1994-06-27) & JP 06 082845 A (CHINON IND INC), 25 mars 1994 (1994-03-25) -& JP 06 082845 A 25 mars 1994 (1994-03-25)**
• **N. WOLFFER ET AL.: "Holographic switching between single mode fibres based on electrically addressed nematic liquid crystal gratings with high deflection accuracy" OPTICS COMMUNICATIONS, vol. 160, 1 février 1999 (1999-02-01), pages 42-46, XP004155717**

EP 1 292 858 B1

## Description

L'invention concerne les matériels qui effectuent des commutations de faisceaux optiques pour des fonctions d'aiguillage de canaux de transport.

Ces systèmes permettent d'interconnecter une à une et de façon indépendante les fibres optiques d'un câble d'entrée vers celles d'un câble de sortie.

Ce type d'équipement peut être utilisé dans des équipements de brassage optique ou de commutation. Une autre application potentielle concerne la sécurisation des boucles optiques d'un réseau de transport, le système assurant le ré-routage au niveau d'un noeud.

De façon plus générale, ces équipements concernent tous les domaines où l'aiguillage de faisceaux optiques est nécessaire.

Les systèmes de brassage actuels utilisent le principe de l'aiguillage électronique classique des commutateurs. En entrée des brasseurs, les faisceaux optiques sont convertis en signaux électriques par des photodiodes puis un aiguillage électronique est effectué classiquement. En sortie de brasseur et dans la fibre considérée, un laser émet un faisceau optique à la bonne longueur d'onde et à la bonne fréquence de modulation.

Il existe d'autres systèmes qui fonctionnent en espace libre. Les équipements les plus avancés sont composés d'éléments mécaniques montés sur des moteurs pas à pas qui alignent les fibres en regard les unes des autres. Aujourd'hui, ces machines commercialisées par la société JDS [1] permettent d'interconnecter jusqu'à 32 fibres. Ces équipements sont actuellement utilisés dans les réseaux de transport optiques.

Un troisième type d'aiguilleur utilise la propagation guidée sur un substrat et l'aiguillage est réalisé par chauffage d'une zone guidante. La société NEL vend un aiguilleur de capacité 8x8 réalisé en technologie thermo-optique de guides silice sur un substrat de silicium [2]. La société Akzo-Nobel commercialise des aiguilleurs $1 \times 8$ utilisant des guides en matériau polymère sur un substrat silicium [3].

D'autres approches sont explorées en laboratoire, en particulier des systèmes associant des cellules à cristaux liquides et des cristaux biréfringents de calcite. Ces systèmes mettent en oeuvre des cellules électriquement adressées qui peuvent modifier l'état de la polarisation du faisceau optique. En fonction de la polarisation, le faisceau est alors dévié ou non [4].

Des études ont été faites sur un système de déflexion holographique utilisant un matériau photothermoplastique. Des réseaux de diffraction qui sont photoinscrits dans ce matériau assurent la déflexion des faisceaux optiques. Un système de capacité 16x16 a été réalisé en laboratoire [5].

Les systèmes de brasseur électronique utilisant la conversion optoélectronique et l'aiguillage électronique sont limités à des débits de l'ordre de 2,5 Gigabits/s car les composants électroniques qui assurent la commutation sont limités en fréquence de fonctionnement. Même si les améliorations constantes apportées sur les circuits intégrés repoussent les limites de fonctionnement à des fréquences de plus en plus élevées, les débits que nécessitent les brasseurs de grande capacité seront très difficilement atteints par cette technologie.

Les aiguilleurs mécaniques utilisant des moteurs pas à pas possèdent l'avantage d'atténuer faiblement les signaux optiques qui le traversent grâce à une grande précision d'alignement des fibres. Par contre ces systèmes sont lents car ils peuvent nécessiter des déplacements importants. De plus, ce temps de réponse est proportionnel à la capacité du système (typiquement une seconde). L'utilisation de nombreuses pièces mécaniques en mouvement peut poser des problèmes d'usure, de répétabilité et donc de fiabilité. Enfin, le coût de ces machines est actuellement très élevé ce qui limite bien sûr leur intégration dans les réseaux.

Les aiguilleurs de technologies planaires sont actuellement réalisés sur substrat silicium et la capacité de ces systèmes est limitée entre-autres, par la dimension des substrats (ou wafers) disponibles. Aux aiguilleurs eux-mêmes, il faut ajouter l'encombrement des guides optiques assurant les interconnexions, il faut en effet que le rayon de courbure des guides soit suffisamment important pour ne pas générer de pertes optiques. Avec les substrats actuels, les capacités semblent limitées à 16x16.

Les systèmes à cristaux liquides utilisant la technique de rotation de polarisation nécessitent de cascader un grand nombre de cellules et de cristaux biréfringents pour atteindre des capacités importantes. Ceci entraîne un coût important, un encombrement conséquent et potentiellement des pertes élevées. De plus, cette technique nécessite un nombre d'étages de commutation élevé pour s'affranchir de configurations bloquantes.

On a également proposé, dans [6], un aiguilleur de faisceaux optiques comportant deux cellules à cristaux liquides munies chacune d'une série d'électrodes pour générer un milieu à indice optique inhomogène, de répartition choisie pour une déviation précise de chaque faisceau. Toutefois, le dispositif de ce document nécessite des aménagements d'alimentation des électrodes qui sont complexes et fastidieux à mettre en oeuvre.

Le but principal de l'invention est de résoudre cet inconvénient, c'est à dire de fournir un aiguilleur à déviation par cellules à cristaux liquides qui présente des aménagements de commande facilitant son implémentation et réduisant son coût de réalisation.

Ce but est atteint selon l'invention grâce à un aiguilleur de faisceau optique tel que décrit dans la revendication 1.

D'autres buts, caractéristiques et avantages de l'invention apparaîtront mieux à la lecture de la description détaillée qui va suivre, faite en référence aux figures annexées sur lesquelles :

- la figure 1 est une vue de côté d'un aiguilleur selon l'invention;
- la figure 2 est une coupe longitudinale d'une portion d'une cellule à cristaux liquides de l'aiguilleur de la figure 1, mise en correspondance avec un tracé représentant une répartition d'indices optiques dans cette portion de cellule, et mise en correspondance avec une série de taches de diffraction obtenues en sortie de cette cellule;
- la figure 3 représente un circuit d'alimentation d'électrodes de cellules à cristaux liquides d'un aiguilleur selon l'invention ;
- la figure 4 est une coupe longitudinale d'un aiguilleur selon l'invention.
- la figure 5 présente le même aiguilleur en perspective ;
- la figure 6 présente une carte de déviation de l'aiguilleur de la figure 5 en vue de face ;
- la figure 7 est une vue en coupe longitudinale d'un dispositif selon l'invention.

Le dispositif décrit ici est un aiguilleur de faisceaux optiques de capacité huit fibres vers huit fibres complètement intégré dans un coffret connectorisé et possédant une électronique de commande et un logiciel d'adressage.

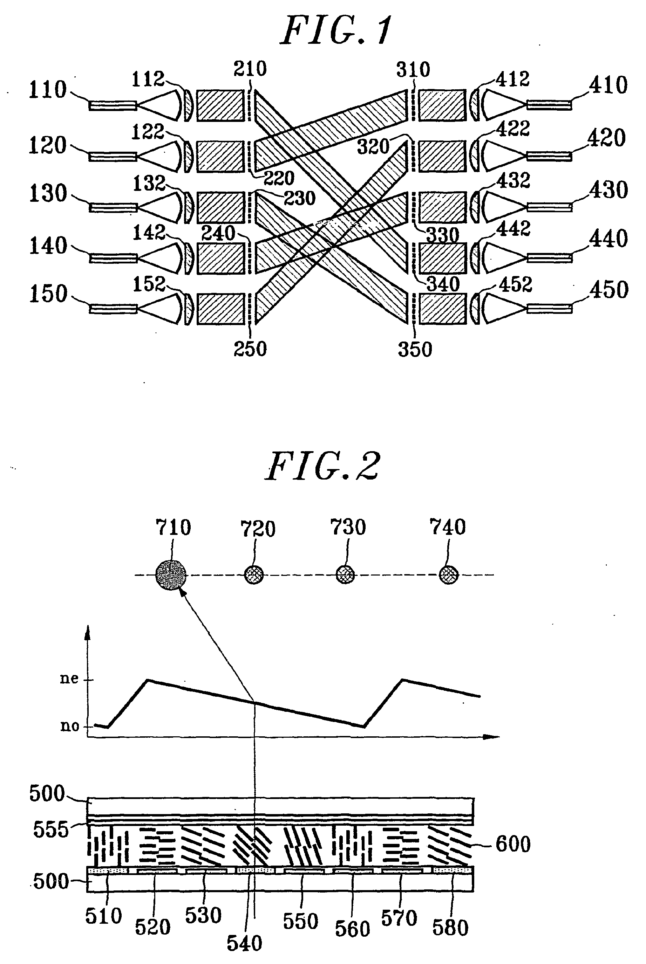

Le schéma de la figure 1 décrit la fonctionnalité optique du dispositif appliquée à l'interconnexion de cinq fibres parmi les huit.

Cet équipement permet d'aiguiller un faisceau venant de n'importe quelle fibre d'entrée 110 à 150 à l'aide d'une cellule à cristaux liquides 200 et de dévier à l'aide d'une seconde cellule 300, les faisceaux en entrée de fibres de sortie 410 à 450. Les interconnexions sont faites fibre à fibre, en défléchissant à l'aide des deux plans 200 et 300, les faisceaux optiques qui se propagent en espace libre.

L'équipement effectue l'aiguillage de canaux optiques et les durées de reconfiguration sont de l'ordre de la centaine de milliseconde. Cet équipement est bon marché car il utilise la technologie des cellules à cristaux liquides. Enfin, cette technologie permet d'atteindre des capacités élevées.

La déflexion est réalisée à l'aide de cellules diffractives à cristal liquide nématique qui génèrent des réseaux de phase. Les réseaux de diffraction sont créés en appliquant, sur des électrodes telles que celles référencées 510 à 580 et représentées en détail à la figure 2, des tensions alternatives c'est à dire des tensions alternatives aux bornes du cristal liquide 600 contenu dans les cellules.

Les fibres d'entrée 110 à 150 sont équidistantes et disposées en barrette. Elles sont suivies de micro lentilles 112 à 152 dont le rôle est de rendre les faisceaux optiques non divergents sur toute la longueur de propagation.

Chaque cellule 200 et 300 présente une série de zones correspondant chacune à une fibre. Ces zones sont également appelées ici « hologrammes ».

Un premier plan d'hologrammes défléchit chaque faisceau dans une direction bien précise. Ensuite la seconde cellule 300 à cristaux liquides, redresse les faisceaux qui sont ensuite injectés dans les fibres de sortie 400 à 450 grâce à des microlentilles de sortie 412 à 452 positionnées devant les barrettes 410 à 450. Les fibres, les lentilles et les hologrammes (ou « zones ») ont le même pas et sont précisément alignés les uns par rapport aux autres afin de minimiser les pertes ([6]).

Les zones d'entrée 210 à 250 sont constituées par une même cellule 200 à cristaux liquides en entrée, et celles de sortie 310 à 350 sont constituées par une même cellule à cristaux liquides de sortie 300, constituant les éléments actifs qui assurent la déflexion des faisceaux.

Ces cellules sont composées de deux lames de verre 500 distantes de quelques microns où est inséré le cristal liquide 600.

Une des lames de verre est entièrement recouverte d'une électrode conductrice et transparente 555 : c'est la contre-électrode. L'autre lame de verre possède des zones conductrices et transparentes 510 à 580 qui sont gravées selon un motif bien spécifique : ce sont les électrodes.

Les électrodes 510 à 580 ont un grand rapport longueur sur largeur, elles ont typiquement quelques microns de large sur quelques millimètres de long. L'espace entre les électrodes, ou inter-électrodes, est très critique, il fait également quelques microns.

Pour chaque zone ou hologramme, ces électrodes sont juxtaposées en grand nombre afin de couvrir la totalité d'un faisceau dont le diamètre fait un à deux millimètres.

Par construction de la cellule, l'alignement initial des molécules nématiques est planaire et leur grand axe est parallèle à la longueur des électrodes.

Le faisceau optique incident doit être polarisé linéairement avec son axe de polarisation parallèle au grand axe des molécules nématiques.

Des tensions électriques alternatives sont appliquées ici aux bornes du cristal liquide entre les électrodes 510 à 580 et la contre-électrode 555. Sous l'action des tensions, l'anisotropie diélectrique du cristal liquide 600 fait basculer les molécules qui alignent leur grand axe parallèlement au champ électrique. Le basculement des molécules induit alors une modification des indices de réfraction du milieu traversé par le faisceau optique.

Quand on applique sur une suite d'électrodes 510 à 580 la même variation de tension, on génère dans le cristal liquide 600 une structure de phase périodique. La répétition de cette structure de phase forme la période d'un réseau qui va diffracter le faisceau incident.

On peut modifier la période du réseau en augmentant ou en diminuant le nombre d'électrodes adressées avec la même variation de tension. L'angle de déflexion est modifié en changeant la période du réseau.

Si les tensions sont continuement croissantes, la phase décroît continuement et génère ainsi un réseau en dent de scie ou réseau blazé. Le rendement de diffraction, défini comme le rapport de l'énergie lumineuse d'une tache diffractée sur l'énergie qui serait transmise par le réseau en l'absence de tension, caractérise l'efficacité de déflexion. La figure 2 montre une telle cellule à cristal liquide à profil de phase blazé.

On utilise une des taches diffractées comme faisceau de sortie. Il faut donc que le rendement de diffraction correspondant à cette tache soit le plus élevé possible.

Sur cette figure, l'une des taches de diffraction 710 à 740 (par exemple la tache d'ordre 1 qui est référencée 710), sera utilisée comme faisceau défléchi.

Pour une tension nulle, l'indice du milieu est élevé ($n_0$ du cristal liquide) et pour une tension forte l'indice est faible (ne du cristal liquide) et entre ces deux extrêmes les tensions sont ajustées pour former un profil linéaire continuement décroissant.

Des rendements de diffraction de l'ordre de 60 à 90% sont obtenus avec cette technique.

Ce type d'aiguilleur possède de nombreux avantages. Il est indépendant du débit de transmission et du type de protocole de transport car les faisceaux optiques sont simplement défléchis sans que leur contenu ne soit modifié.

De plus, la configuration du système qui est de type N vers N , est strictement non bloquante, c'est à dire que, d'une part toutes les configurations de connexion sont possibles et de plus la reconfiguration de deux connexions ne perturbe pas les connexions déjà établies.

D'autre part, le principe de la déflexion holographique présente des pertes qui varient peu avec la capacité du système car le nombre d'éléments optiques à traverser est constant quand la capacité croit et seuls les rendements de diffraction diminuent légèrement quand les angles augmentent. Cette technique permet donc d'atteindre à terme des capacités importantes en nombre de fibres.

Le système présenté ici est un équipement complet d'aiguilleur holographique permettant d'interconnecter huit fibres vers huit fibres.

L'aiguilleur, sa matrice d'aiguillage optique à cristal liquide, et son électronique d'adressage sont intégrés dans un coffret connectorisé, et un logiciel de commande sur PC déporté gère les connexions de l'équipement. Dans un premier temps on décrira le système optique puis l'électronique d'adressage et enfin le logiciel d'adressage.

La partie optique active du système est constituée de deux cellules à cristaux liquides 200 et 300 identiques assurant la déflexion de faisceaux. L'optique passive comprend des barrettes de fibres optiques 110 à 150 d'entrée, et de sortie 410 à 450 sur la figure 1, des micro-lentilles 112 à 152 et 412 à 452 ainsi qu'un ensemble constitué d'une lame demi-onde 800 et un cristal biréfringent 850 pour rendre l'aiguilleur insensible à la polarisation. Des pièces mécaniques assurent le positionnement précis de ces éléments optiques.

Les cellules à cristaux liquides 200 et 300, ont été conçues à partir de circuits électroniques pour écrans plats. Ces circuits, référencés Cirrus Logic 6840, sont des démultiplexeurs colonnes qui peuvent délivrer des tensions quasi-analogiques comprises entre 0 et 5V.

Ces circuits sont montés sur des supports flexibles appelés en anglais « Tape Automated Bonding » (TAB), qui possèdent 309 sorties chacun (103 triades de couleurs primaires rouge, vert et bleu) sorties qui sont connectées aux électrodes de la zone associée, c'est à dire à la zone de la cellule associée à un faisceau considéré, à l'aide d'un adhésif à conduction électrique anisotrope.

Les TAB, référencés 910 à 980, sont associés respectivement à de telles zones différentes parmi les huit de chaque cellule 200 et 300.

En entrée d'un TAB, une vingtaine de connexions sont reliées à un circuit périphérique qui gère des tensions d'adressage (repère du circuit, sens de défilement des tensions, fréquence d'adressage etc.). Un TAB spécifique est donc ici dédié par faisceau optique.

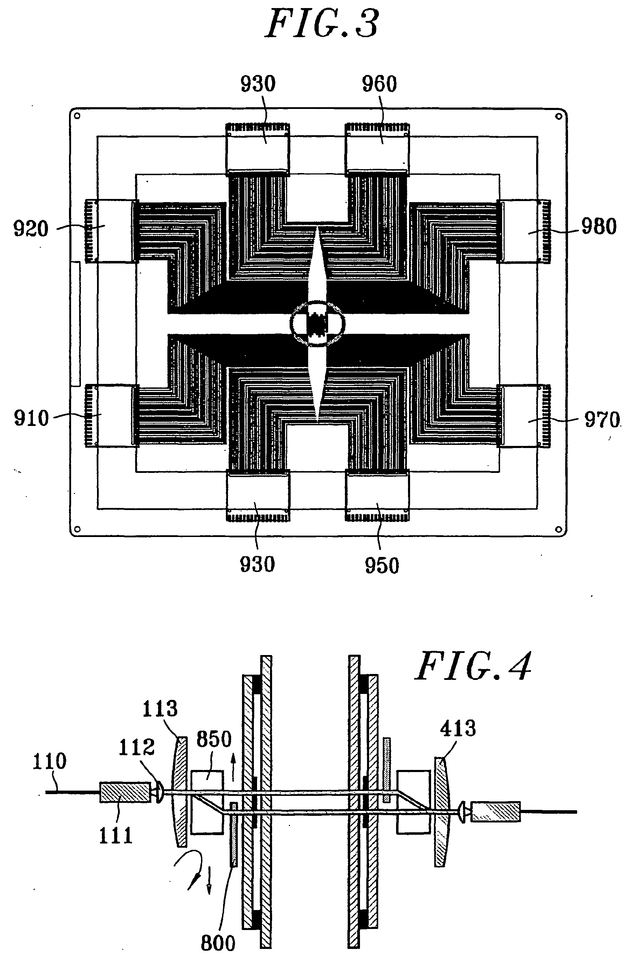

L'aiguilleur comporte pour chaque cellule d'entrée ou de sortie un groupe de 8 TAB qui sont répartis sur une carte périphérique, comme le montre la figure 3, chaque TAB fournissant des tensions de commande sur les électrodes d'une dite zone d'entrée (sur les électrodes d'une dite zone de sortie dans le cas de la carte de sortie).

Les TAB serviront à transformer un signal indiquant le couple canal d'entrée/canal de sortie à raccorder, en des signaux d'alimentation correspondants à ces électrodes, c'est à dire à adresser chacun une des huit zones distinctes d'une carte donnée où passe à chaque fois un faisceau optique.

Sachant que le pas des zones de la cellule, correspondant chacune à un faisceau est de 1,4 mm, chaque zone active est constituée de 309 électrodes de 2,5 $\mu$m de large et de 3 mm de long, l'espacement entre les électrodes est de 2 $\mu$m.

Pour une précision optimale, on préfère un nombre d'électrodes par zone compris entre 100 et 500.

Les conducteurs d'une cellule sont constitués de deux couches métalliques gravées en deux fois afin de réduire le nombre de conducteurs coupés (redondance) et aussi pour diminuer les résistances d'accès entre le TAB et la zone active. Une couche métallique sur la contre-électrode 555 sert à définir un masque optique où seules les ouvertures laissent passer la lumière.

Outre les deux cellules à cristaux liquides 200 et 300 positionnées en face l'une de l'autre, l'aiguilleur est composé d'un ensemble d'éléments optiques qui le rend indépendant de la polarisation.

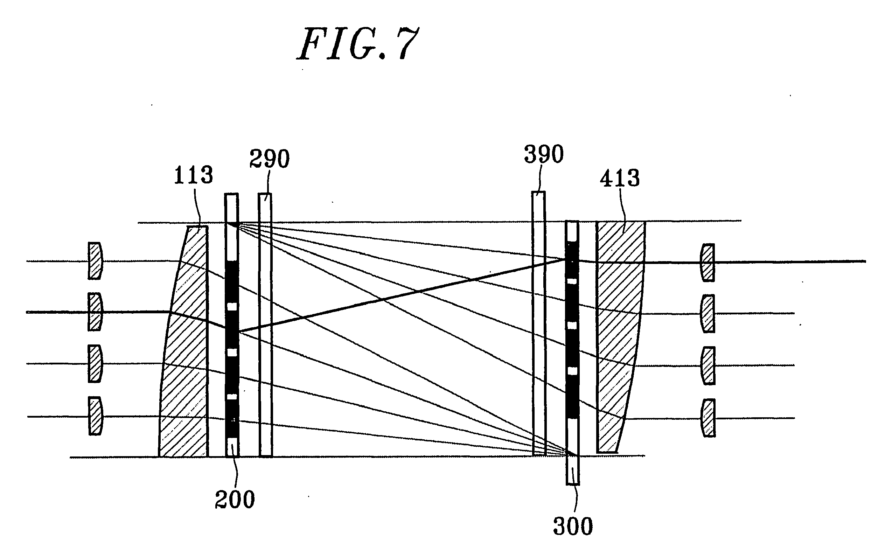

Comme le montre la figure 7, dans un système d'aiguillage optique faisant appel à des composants diffractifs reconfigurables (comme par exemple les modulateurs spatiaux de lumière à cristaux liquides), les pertes de puissance optique associées à la déflexion de chaque faisceau optique dépendent de la valeur de l'angle de déflexion.

Cette dépendance se traduit par une variation des pertes optiques totales du système d'aiguillage en fonction des entrées / sorties connectées. Comme expliqué ci-après, le système proposé permet, grâce à la présence d'une macrolentille 113 et 413 devant chaque cellule 200 et 300, d'obtenir des pertes uniformes sur toutes les connexions possibles entre les entrées et les sorties du système, et ce sans avoir recours à un quelconque système d'asservissement en puissance optique.

On remarque tout d'abord que les variations de pertes du système en fonction des connexions sont liées à celles des modules d'entrée (fibres + microlentilles + composants de traitement de polarisation éventuels), des deux étages de déflexion, et des modules de sortie.

On a représenté sur la figure 7 l'effet des macrolentilles sur la répartition géométrique des faisceaux.

Quand on utilise plusieurs lentilles associées à des cellules, on place avantageusement les centres optiques de ces lentilles sur des côtés opposés du trajet de la lumière , de sorte que les effets des lentilles se compensent et que les déviations à mettre en oeuvre par les cellules déviatrices ne sont pas trop élevées.

Pour une connexion donnée de l'entrée i vers la sortie j, et dans l'approximation paraxiale, l'angle de déflexion à l'entrée ne dépend, grâce à la présence d'une macrolentille convergente devant la cellule d'entrée 200 (ou de tout autre type de montage convergent, comme une série de lentilles sur le même trajet optique par exemple), que de la sortie (pas de l'entrée considérée). En effet, tous les ordres 0 de lumière étant, quelquesoit l'entrée considérée, focalisés sur l'axe de la macrolentille d'entrée, il faut, quelque soit l'entrée considérée, une même déflexion pour que l'ordre 1 soit dévié sur une sortie donnée.

On peut donc corriger les pertes de déflexion d'entrée par un atténuateur à répartition d'atténuation fixe devant la cellule de sortie 300, référencé 390 sur la figure 7.

De même, l'angle de déflexion à la sortie ne dépend, grâce à la présence d'une macrolentille convergente devant la cellule de sortie 300 (ou de tout autre type de montage convergent sensiblement sur la cellule d'entrée, comme une série de lentilles sur le même trajet optique par exemple), que de l'entrée (pas de la sortie considérée).

On peut donc corriger les pertes de déflexion de sortie par un atténuateur à répartition d'atténuation fixe devant la cellule d'entrée 200, référencé 290 sur la figure 7.
Cette propriété intéressante du système, liée à l'utilisation des macrolentilles, permet d'écrire les pertes du système (en dB) sous la forme suivante :

$$p(i,j) = p_e(i) + p_1(j) + p_2(i) + p_s(j) \quad \text{avec} \quad \begin{cases} p_e(i) \text{ pertes à l'entrée, dépendant de l'entrée } i \\ p_1(j) \text{ pertes de déflexion à l'entrée} \\ p_2(i) \text{ pertes de déflexion à la sortie} \\ p_s(j) \text{ pertes à la sortie, dépendant de la sortie } j \end{cases}$$

On peut donc uniformiser les pertes du système d'aiguillage indépendamment de la configuration d'interconnexion de celui-ci, en plaçant des atténuateurs sur toutes les entrées et sur toutes les sorties du commutateur. Ces atténuateurs sont, selon une variante, des atténuateurs non programmables, de coût encore plus faible.

Le présent dispositif utilise des atténuateurs réglables sur les entrées et les sorties, le préréglage des atténuateurs permettant d'obtenir des pertes optiques uniformes sur toutes les connexions possibles entre les entrées et les sorties du système, et indépendantes de la configuration de ces connexions. Les atténuateurs sont donc d'atténuation fixe.

Les atténuateurs d'entrée [resp. de sortie] doivent être préréglés à des valeurs de pertes de type *Cste* $-p_e(i)-p2(i)$ [resp. *Cste'* $-p_1(j)-p_s(j)$ ].

Ce préréglage des atténuateurs, effectué une seule fois lors de la phase d'alignement du système, permet de rendre les pertes du système indépendantes des connexions considérées ou de la configuration du système.

Comme le montre la figure 4, l'ensemble optique de l'aiguilleur est rendu insensible à la polarisation du faisceau à l'aide des moyens suivants.

En sortie de chaque lentille 111 se trouve une macro-lentille 112 et chaque faisceau optique traverse ensuite une lame de calcite 850 qui sépare les composantes horizontales et verticales de la polarisation.

Lors de la traversée de la lame 850, le rayon ordinaire se propage dans l'axe, par contre, le rayon extraordinaire est dévié à l'entrée et à la sortie pour en sortir parallèle à l'ordinaire, mais spatialement séparé.

Une lame demi-onde 800 fait alors tourner la polarisation du faisceau ordinaire pour qu'elle devienne parallèle à celle du faisceau extraordinaire et aux molécules de cristal liquide.

La recombinaison en sortie de la cellule de sortie 300 est effectuée avec des composants optiques identiques, de façon symétrique à l'entrée, afin que les trajets optiques des deux faisceaux soient égaux. On évite ainsi les pertes optiques grâce à une gestion de la dispersion de polarisation.

Une électronique spécifique a été conçue pour appliquer des tensions précises aux bornes de chaque électrode des cellules à cristaux liquides 200 et 300 en gênant les électrodes gérées par groupes de 309 (par TAB et par canal, c'est à dire par faisceau).

Ces tensions alternatives sont comprises entre 0 et 5V efficace, ont une fréquence réglable de 1 KHz à 100 KHz. Comme il est important que les rampes de phase soit aussi linéaires que possible afin d'optimiser les rendements de diffraction, les circuits TAB Cirrus sont programmés pour corriger la non-linéarité de la réponse du cristal liquide à partir de la courbe de réponse phase/tension, c'est à dire indice/tension d'une zone de cellule donnée.

Ainsi, la précision sur la tension délivrée par les TAB est de l'ordre de 40mV. L'électronique permet d'ajuster les tensions de chaque TAB et de synchroniser l'alternat de la contre-électrode. Un microprocesseur programmable situé dans le TAB assure ces différentes fonctions et chaque module est réglable indépendamment, ce qui permet de corriger d'éventuelles différences de fabrication au niveau de la cellule.

En dédiant un circuit par faisceau à dévier, c'est à dire un circuit apte à alimenter les électrodes d'une zone de cellule en fonction de données indiquant la commutation des canaux, on obtient une précision et une rapidité de déviation optique accrue ainsi qu'un coût de réalisation moindre.

On garde ces avantages lorsqu'on adopte selon une variante, une pluralité de circuits dont chacun alimente une partie déviant plusieurs faisceaux, c'est à dire regroupant plusieurs dites zones, chaque partie étant propre à un circuit distinct.

Ainsi, chaque circuit réalise un traitement spécifique pour ses propres zones et, en partitionnant ainsi les traitements d'une même cellule, on gagne en fiabilité de traitement et en coût de réalisation.

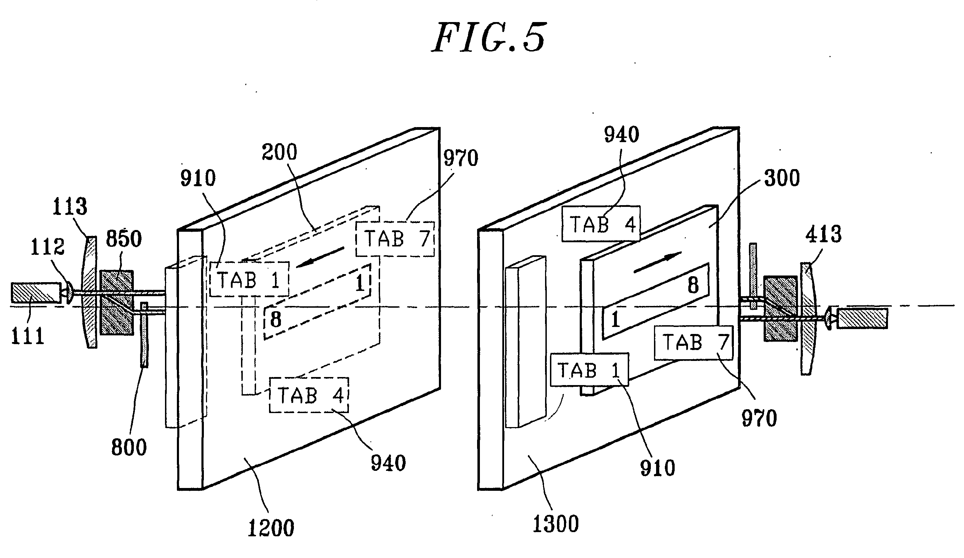

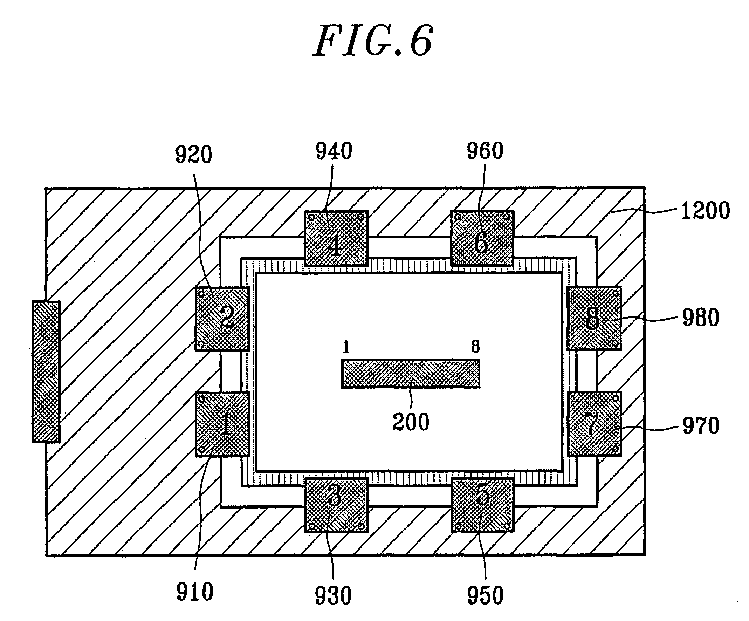

Comme représenté aux figures 3, 5 et 6, chaque écran à cristaux liquides 200 et 300 est ici monté sur une carte de circuit imprimé respective 1200 et 1300, sur laquelle sont également montés huit circuits de commande semblables aux circuits 910 à 980 présentés ci avant. Chaque carte 1200 et 1300 porte donc ici un nombre de circuits égal au nombre de faisceaux à dévier.

Ces circuits sont répartis autour d'une fenêtre centrale traversant la carte, fenêtre qui est traversée par les faisceaux et recouverte par la cellule à cristaux liquides considérée.

On obtient ainsi un ensemble monobloc comprenant à chaque fois la cellule et la série de circuits qui transforment chacun des signaux indiquant les déviations souhaitées en des tensions d'alimentation des électrodes de la cellule considérée.

Les deux cartes 1200 et 1300 sont donc placées parallèlement l'une à l'autre de manière décalée le long du parcours des faisceaux optiques.

Un logiciel d'adressage permet de gérer toutes les commandes de l'aiguilleur. Le programme développé sous LabWindow/CVI (marque commerciale) comprend trois modes d'utilisation : un mode réglage, un mode local ou bien un mode automatique.

Le premier mode, appelé « mode réglage », est utilisé lors de la mise au point de l'appareil avant son implémentation. Il permet en particulier de déterminer la correction de non-linéarité du cristal liquide puis les tensions à appliquer sur chaque électrode pour les différentes interconnexions optiques.

Plusieurs options sont disponibles pour obtenir ces tensions. Le système peut calculer les tensions à appliquer au réseau en fonction de l'angle de déflexion voulu et ceci est paramétrable en fonction de la longueur d'onde. Il est également possible de définir manuellement les tensions d'adressage. On peut enfin charger un tableau de valeurs obtenues par calcul sur une application de type tableur, par exemple sur le tableur EXCEL. On en déduit un tableau de valeurs correspondant à l'interconnexion de chaque fibre d'entrée avec chaque fibre de sortie.

Ces données sont donc stockées sous forme de tableaux Excel que le logiciel sait lire ou écrire. La totalité des interconnexions représente 64 tableaux. Les configurations optimisées d'une fibre d'entrée i vers une fibre de sortie j, sont alors mises en mémoire dans l'électronique de proximité du système, c'est à dire dans la mémoire de chaque TAB.

Le second mode ou « mode local », sert à faire fonctionner l'aiguilleur de façon simple en appelant les configurations optimisées qui ont été mises en mémoire précédemment. Les connexions se font en actionnant les commandes graphiques d'un tableau possédant huit entrées et huit sorties. L'ordinateur central ou PC sur lequel fonctionne le logiciel envoie alors des informations d'indications de couplage sur les différents TAB. Ces commandes activent les configurations en mémoire.

Le mode « automatique » permet d'utiliser cet équipement dans une chaîne de commutation complète avec d'autres matériels en amont et en aval. L'ensemble des TAB est alors commandé via une carte GIPB et un bus IEEE à partir d'un ordinateur central différent du PC de commande locale. Les commandes IEEE activent les configurations optimisées qui ont été mises en mémoire en mode réglage.

On peut dresser un bilan de liaison à partir de différents facteurs :

Contrairement à celles de lentilles réfractives, les performances des barrettes de lentilles holographiques à plusieurs niveaux de phases se sont révélées être compatibles avec les critères de précision de positionnement relatif du centre des lentilles. Les barrettes de micro-lentilles utilisées ici sont fabriquées à l'université Herriot Watt à Edimbourg, elles ont 4 niveaux de phase et sont traitées anti-reflets. Le rapport entre la puissance du faisceau transmis et celle du faisceau incident est compris entre 70 et 75%, le restant de la lumière étant perdue dans des faiscaux diffractés en dehors du système.

La transmission des cellules de cristaux liquides qui sont aussi traitées anti-reflets est limitée par la transmission de l'ITO. Nous avons mesuré des transmissions comprises entre 85 et 90%.

D'autre part, seule une partie de la lumière est déviée dans la direction voulue. Nous appellerons rendement de diffraction, le rapport entre la puissance du faisceau utile transmis et la puissance totale transmise. Ce rendement varie quasiment linéairement, de 98% pour un angle de déviation proche de 0, à 50% pour une déviation de 5°.

L'angle de déviation minimal est de 0,22° et l'angle maximal est de 2,7°, les rendements respectifs sont 96% et 70%.

On s'attend donc à ce que la transmission globale de l'ensemble des deux cellules varie de $0,85^2$ x $0,7^2$ = 35% à de $0,85^2$ x $0,96^2$ = 66%. Dans le présent mode de réalisation, aucune correction n'est prévue pour égaliser les transmissions. Cependant, puisque l'angle de déviation de l'hologramme d'entrée ne dépend que du numéro de la sortie et vice-versa, cette mono-dépendance étant d'autant plus exacte qu'on adopte les macrolentilles 114 et 414 décrites précédemment, on égalise, selon une variante, la transmission du système en ajoutant des densités optiques à chaque entrée et à chaque sortie.

Le tableau suivant indique la transmission de l'ensemble des deux plans d'hologrammes pour toutes les liaisons possibles.

| E↓/S→ | 1 | 2 | 3 | 4 | 5 | 6 | 7 | 8 |
|---|---|---|---|---|---|---|---|---|
| 1 | 20,5 | 22,1 | 27 | 28,5 | 28,2 | 26,1 | 36,6 | 44,8 |
| 2 | 23,4 | 25,8 | 31,1 | 32,6 | 31,9 | 32,9 | 40,0 | 48,2 |
| 3 | 25,5 | 30,2 | 32,8 | 35,0 | 37,0 | 35,5 | 45,5 | 51,7 |
| 4 | 27,6 | 31,2 | 33,4 | 35,8 | 38,2 | 39,2 | 43,4 | 60,0 |
| 5 | 33,4 | 38,5 | 41,3 | 43,1 | 44,2 | 44,3 | 52,2 | 58,5 |
| 6 | 34,8 | 40,6 | 44,7 | 47,5 | 48,4 | 48,2 | 57,5 | 63,0 |
| 7 | 38,0 | 42,9 | 46,4 | 50,1 | 51,7 | 54,4 | 60,7 | 65,7 |
| 8 | 44,2 | 47,8 | 51,3 | 54,9 | 55,0 | 57,7 | 61,8 | 62,3 |

Bien entendu, les dispositions décrites ici en rapport à un aiguilleur à déviation dans un plan sont également avantageuses dans le cas d'un aiguilleur à déviation bi-dimensionnelle.

[1] JDS documentation commerciale
[2] 8x8 Optical Matrix Switch, NEL, NTT Electrics Technology Corp. Documentation commerciale
[3] www.beambox.com
[4] Transparent optical cross-bar switch using liquid crystal optical light modulator arrays, K. Noguchi, ECCO'97, Edimbourg
[5] Holographic switching between single mode fibres : evaluation of a 16x16x demonstrator and perspectives, L. Bonnel & P. Gravey, Photonic in switching, Sendai, Japon 1996
[6] N. Wolfer, B. Vinouze and P. Gravey. Optics Communications, 160 (1999) p.42-46

**EP 1 292 858 B1**

**Revendications**

1. Aiguilleur de faisceaux optiques comprenant :

 - une pluralité de canaux optiques d'entrée (110,..., 150) aptes à transmettre un faisceau optique ;
 - une pluralité de canaux optiques de sortie (410,..., 450) ;
 - une première cellule à cristaux liquides (200), apte à dévier un faisceau optique provenant de l'un des canaux d'entrée (110,..., 150) ;
 - une seconde cellule à cristaux liquides (300), apte à dévier un faisceau optique provenant de la première cellule à cristaux liquides (200) et étant destiné à l'un des canaux de sortie (410,..., 450) ;

 les deux cellules à cristaux liquides (200, 300) comportant chacune une série d'électrodes (510,..., 580), chacune des électrodes étant apte à orienter des cristaux liquides (600) lorsqu'elle est soumise à une tension d'alimentation, les électrodes (510, 580) étant réparties par zones (210,..., 250, 310,..., 350), chaque zone correspondant à un seul canal optique d'entrée (110,..., 150) ou un seul canal optique de sortie (410,..., 450), l'aiguilleur comprenant en outre des moyens (910, 980) pour alimenter les électrodes (510, 580) avec des tensions choisies, **caractérisé en ce que**

 - les deux cellules à cristaux liquides (200, 300) sont montées sur deux cartes distinctes (1200, 1300), chacune des cellules (200, 300) étant placée sur une carte en recouvrement d'une ouverture traversante de ladite carte (1200, 1300),
 - les moyens pour alimenter les électrodes consistent **en ce que** chacune desdites cellules à cristaux liquides (200, 300) comporte une pluralité de circuits électroniques distincts (910,..., 980) montés répartis autour de ladite ouverture, chacun (910) de ces circuits électroniques (910, 980) étant associé à une zone différente (210) de ladite cellule (200, 300) et apte à transformer un signal de commande indiquant un canal (410) à coupler au canal (110) correspondant à cette zone (210), en des signaux d'alimentation des électrodes (510, 580) de cette zone (210).

2. Aiguilleur selon la revendication 1, **caractérisé en ce que** chaque circuit électronique (910,..., 980) inclut une mémoire dans laquelle sont stockés des jeux de valeurs de tensions d'électrodes, chaque jeu correspondant à une déviation du faisceau traversant la zone associée lorsque les électrodes de la zone sont alimentées avec ces tensions.

3. Aiguilleur selon la revendication 1 ou la revendication 2, **caractérisé en ce que** chaque circuit électronique (910,..., 980) est apte à délivrer des tensions alternatives sur les électrodes (210,..., 250, 310,..., 350) de la zone à laquelle il est connecté.

4. Aiguilleur selon l'une quelconque des revendications précédentes, **caractérisé en ce que** chaque zone (210,..., 250, 310,..., 450) associée à un canal (110,..., 150, 410,..., 450) comprend un nombre d'électrodes (510,..., 580) compris entre 100 et 500.

5. Aiguilleur selon l'une quelconque des revendications précédentes, **caractérisé en ce que** chacun des circuits électroniques (910,... 980) est programmé pour corriger une non-linéarité de réponse indice optique/tension d'alimentation des cristaux liquides de la zone (210,..., 250, 310,..., 350) associée.

6. Aiguilleur selon l'une quelconque des revendications précédentes, **caractérisé en ce qu'**il comprend des moyens pour ajouter des densités optiques devant l'une des deux cellules (200, 300) à cristaux liquides, avec une répartition propre à compenser des inhomogénéités de transmission dépendant de couples canal d'entrée/canal de sortie.

7. Aiguilleur selon l'une quelconque des revendications précédentes, **caractérisé en ce qu'**il comprend

 - en amont de la première cellule à cristaux liquides (200), des moyens (850) pour séparer une composante de polarisation horizontale d'une composante de polarisation verticale d'un faisceau optique transmis par un canal optique d'entrée, et des moyens (800) pour transformer une de ces composantes en sa composante perpendiculaire ;
 - et, de façon symétrique, en aval de la seconde cellule à cristaux liquides (300), des moyens (800) pour transformer une des deux composantes en sa composante perpendiculaire et des moyens (850) pour combiner deux composantes du faisceau optique destiné à un canal optique de sortie.

**8.** Aiguilleur selon la revendication précédente, **caractérisé en ce que** les moyens de séparation (850) de composante amont induisent un écart de trajet entre les deux composantes, en amont de la première cellule (200) à cristaux liquides, et **en ce que** les moyens de combinaison des deux composantes sont prévus pour compenser cet écart de trajet.

**9.** Aiguilleur selon l'une quelconque des revendications précédentes, **caractérisé en ce qu'**au moins une cellule à cristaux liquides (200, 300) présente des électrodes (510, 580) qui sont constituées chacune par deux couches métalliques gravées en deux fois.

**10.** Aiguilleur selon l'une quelconque des revendications précédentes, **caractérisé en ce qu'**il inclut:

- un ensemble optique convergent (113) placé en recouvrement de la première cellule à cristaux liquides (200) et dont le foyer, défini en rapport au trajet de la lumière dans l'aiguilleur, est au voisinage du plan de la seconde cellule à cristaux liquides (300),
- des moyens (390) produisant une pluralité d'atténuations optiques différentes appliquées aux différents canaux de sortie adjacents à la seconde cellule à cristaux liquides (300), ces atténuations étant réparties en fonction de ces différents canaux, chaque atténuation d'un canal de sortie considéré étant non dépendante du canal d'entrée qui est momentanément associé optiquement audit canal de sortie considéré.

**11.** Aiguilleur selon la revendication 10, **caractérisé en ce que** ladite seconde cellule à cristaux liquides (300) est également munie d'un ensemble optique convergent (413) ayant son foyer au voisinage de la première cellule à cristaux liquides (200) et **en ce que** ladite première cellule à cristaux liquides (200) est munie de moyens (290) produisant une pluralité d'atténuations optiques différentes appliquées aux différents canaux d'entrée adjacents à cette première cellule à cristaux liquides (200), ces atténuations étant réparties en fonction de ces différents canaux, chaque atténuation d'un canal d'entrée considéré étant non dépendante du canal de sortie qui est momentanément associé optiquement audit canal d'entrée considéré.

**12.** Aiguilleur selon la revendication 10 ou la revendication 11, **caractérisé en ce que** le ou un des dits ensembles optiques convergent(s) (113, 413) est constitué par une lentille convergente recouvrant une cellule (200, 300) et ayant son foyer au voisinage de la cellule opposée.

**Claims**

**1.** Optical beam router comprising:

- a plurality of input optical channels (110,...,150) capable of transmitting an optical beam;
- a plurality of output optical channels (410,...,450);
- a first liquid-crystal cell (200) capable of deflecting an optical beam coming from one of the input channels (110,...,150) ;
- a second liquid-crystal cell (300), capable of deflecting an optical beam coming from the first liquid-crystal cell (200) and being directed to one of the output channels (410,...,450);

the two liquid-crystal cells (200, 300) each comprising a series of electrodes (510,...,580), each of the electrodes being capable of orienting liquid crystals (600) when it is supplied with a supply voltage, the electrodes (510,...,580) being distributed in regions (210,...,250, 310,...,350), each region corresponding to a single input optical channel (110,...,150), or a single output optical channel (410,...,450), the router furthermore including means (910,...,980) for supplying the electrodes (510,...,580) with selected voltages, **characterized in that**:

- the two liquid-crystal cells (200, 300) are mounted on two separate cards (1200, 1300), each of the cells (200, 300) being placed on a card covering a through-opening in said card (1200, 1300); and
- the means for supplying the electrodes consist in that each of said liquid-crystal cells (200, 300) comprises a plurality of separate electronic circuits (910, ..., 980) mounted so as to be distributed around said opening, each (910) of these electronic circuits (910, 980) being associated with a different region (210) of said cell (200, 300) and capable of converting a control signal, indicating a channel (410) to be coupled to the channel (110) corresponding to this region (210), into supply signals for the electrodes (510, 580) of this region (210).

2. Router according to Claim 1, **characterized in that** each electronic circuit (910,...,980) includes a memory in which sets of values of electrode voltages are stored, each set corresponding to a deflection of the beam passing through the associated region when the electrodes of the region are supplied with these voltages.

3. Router according to Claim 1 or Claim 2, **characterized in that** each electronic circuit (910,...,980) is capable of delivering alternating voltages to the electrodes (210,...,250, 310,...,350) of the region to which it is connected.

4. Router according to any one of the preceding claims, **characterized in that** each region (210,...,250, 310,...,350) associated with a channel (110,...,150, 410,...,450) comprises a number of electrodes (510,...,580) between 100 and 500.

5. Router according to any one of the preceding claims, **characterized in that** each of the electronic circuits (910,..., 980) is programmed to correct any non-linearity in the optical index/supply voltage response of the liquid crystals of the associated region (210,...,250, 310,...,350).

6. Router according to any one of the preceding claims, **characterized in that** it includes means for adding optical densities in front of one of the two liquid-crystal cells (200, 300) with a distribution suitable for compensating for transmission inhomogeneities that depend on input channel/output channel pairs.

7. Router according to any one of the preceding claims, **characterized in that** it includes:

   - upstream of the first liquid-crystal cell (200), means (850) for splitting a horizontal polarization component from a vertical polarization component of an optical beam transmitted by an input optical channel, and means (800) for converting one of these components into its perpendicular component;
   - and, symmetrically, downstream from the second liquid-crystal cell (300), means (800) for converting one of the two components into its perpendicular component and means (850) for combining two components of the optical beam intended for an output optical channel.

8. Router according to the preceding claim, **characterized in that** the upstream component-splitting means (850) introduce a path difference between the two components, upstream of the first liquid-crystal cell (200) and **in that** the means for combining the two components are designed to compensate for this path difference.

9. Router according to any one of the preceding claims, **characterized in that** at least one of the liquid-crystal cells (200, 300) has electrodes (510, 580) which each consist of two metal layers etched twice.

10. Router according to any one of the preceding claims, **characterized in that** it includes:

    - a convergent optical assembly (113) placed so as to overlap the first liquid-crystal cell (200) and the focal point of which optical assembly, defined in relation to the light path in the router, is in the vicinity of the plane of the second liquid-crystal cell (300),
    - means (390) producing a plurality of different optical attenuations that are applied to the various output channels adjacent to the second liquid-crystal cell (300), these attenuations being distributed according to these various channels, each attenuation of an output channel in question not being dependent on the input channel which momentarily is optically associated with said output channel in question.

11. Router according to Claim 10, **characterized in that** said second liquid-crystal cell (300) is also provided with a convergent optical assembly (413) having its focal point in the vicinity of the first liquid-crystal cell (200) and **in that** said first liquid-crystal cell (200) is provided with means (290) producing a plurality of different optical attenuations that are applied to the various input channels adjacent to this first liquid-crystal cell (200), these attenuations being distributed according to these various channels, each attenuation of an input channel in question not being dependent on the output channel which momentarily is optically associated with said input channel in question.

12. Router according to Claim 10 or Claim 11, **characterized in that** said convergent optical assembly or one of said convergent optical assemblies (113, 413) consists of a convergent lens covering a cell (200, 300) and having its focal point in the vicinity of the opposite cell.

**EP 1 292 858 B1**

**Patentansprüche**

1. Umlenkeinrichtung für optische Strahlen, die aufweist:

   - mehrere optische Eingangskanäle (110, ..., 150), die in der Lage sind, einen optischen Strahl zu übertragen;
   - mehrere optische Ausgangskanäle (410, ..., 450);
   - eine erste Flüssigkristallzelle (200), die einen von einem der Eingangskanäle (110, ..., 150) kommenden optischen Strahl umleiten kann;
   - eine zweite Flüssigkristallzelle (300), die einen von der ersten Flüssigkristallzelle (200) kommenden und für einen der Ausgangskanäle (410, ...,450) bestimmten optischen Strahl umleiten kann;

   wobei die beiden Flüssigkristallzellen (200, 300) je eine Reihe von Elektroden (510, ..., 580) aufweisen, wobei jede der Elektroden Flüssigkristalle (600) ausrichten kann, wenn sie einer Speisespannung ausgesetzt ist, wobei die Elektroden (510, 580) in Zonen (210, ..., 250, 310, ..., 350) verteilt sind, wobei jede Zone einem einzigen optischen Eingangskanal (110, ..., 150) oder einem einzigen optischen Ausgangskanal (410, ..., 450) entspricht, wobei die Umlenkeinrichtung außerdem Mittel (910, 980) aufweist, um die Elektroden (510, 580) mit ausgewählten Spannungen zu speisen,
   **dadurch gekennzeichnet, dass**

   - die zwei Flüssigkristallzellen (200, 300) auf zwei getrennte Karten (1200, 1300) montiert sind, wobei jede der Zellen (200, 300) auf einer Karte angeordnet ist, indem sie eine durchgehende Öffnung der Karte (1200, 1300) überdeckt,
   - die Mittel zum Speisen der Elektroden darin bestehen, dass jede der Flüssigkristallzellen (200, 300) mehrere getrennte elektronische Schaltungen (910, ..., 980) aufweist, die um die Öffnung herum verteilt montiert sind, wobei jede (910) dieser elektronischen Schaltungen (910, 980) einer anderen Zone (210) der Zelle (200, 300) zugeordnet und in der Lage ist, ein Steuersignal, das einen Kanal (410) anzeigt, der mit dem dieser Zone (210) entsprechenden Kanal (110) zu koppeln ist, in Speisesignale der Elektroden (510, 580) dieser Zone (210) umzuwandeln.

2. Umlenkeinrichtung nach Anspruch 1, **dadurch gekennzeichnet, dass** jede elektronische Schaltung (910, ..., 980) einen Speicher umfasst, in dem Sätze von Werten von Elektrodenspannungen gespeichert sind, wobei jeder Satz einer Umleitung des die zugeordnete Zone durchquerenden Strahls entspricht, wenn die Elektroden der Zone mit diesen Spannungen gespeist werden.

3. Umlenkeinrichtung nach Anspruch 1 oder Anspruch 2, **dadurch gekennzeichnet, dass** jede elektronische Schaltung (910, ..., 980) in der Lage ist, Wechselspannungen an den Elektroden (210, ..., 250, 310, ..., 350) der Zone zu liefern, mit der sie verbunden ist.

4. Umlenkeinrichtung nach einem der vorhergehenden Ansprüche, **dadurch gekennzeichnet, dass** jede einem Kanal (110, ..., 150, 410, ..., 450) zugeordnete Zone (210, ..., 250, 310, ..., 350) eine Anzahl von Elektroden (510, ..., 580) aufweist, die zwischen 100 und 500 liegt.

5. Umlenkeinrichtung nach einem der vorhergehenden Ansprüche, **dadurch gekennzeichnet, dass** jede der elektronischen Schaltungen (910, ..., 980) programmiert ist, um eine Nicht-Linearität der Brechungszahl/Speisespannung-Antwort der F2üssigkristalle der zugeordneten Zone (210, ..., 250, 310, ..., 350) zu korrigieren.

6. Umlenkeinrichtung nach einem der vorhergehenden Ansprüche, **dadurch gekennzeichnet, dass** sie Mittel aufweist, um optische Dichten vor einer der zwei Flüssigkristallzellen (200, 300) hinzuzufügen, mit einer Verteilung, die geeignet ist, Übertragungs-Inhomogenitäten zu kompensieren, die von Eingangskanal/Ausgangskanal-Paaren abhängen.

7. Umlenkeinrichtung nach einem der vorhergehenden Ansprüche, **dadurch gekennzeichnet, dass** sie aufweist

   - vor der ersten Flüssigkristallzelle (200), Mittel (850), um eine waagrechte Polarisationskomponente von einer senkrechten Polarisationskomponente eines optischen Strahls zu trennen, der von einem optischen Eingangskanal übertragen wird, und Mittel (800), um eine dieser Komponenten in ihre lotrechte Komponente umzuwandeln;
   - und, symmetrisch hinter der zweiten Flüssigkristallzelle (300), Mittel (800), um eine der beiden Komponenten in ihre lotrechte Komponente umzuwandeln, und Mittel (850), um zwei Komponenten des optischen Strahls zu kombinieren, der für einen optischen Ausgangskanal bestimmt ist.

8. Umlenkeinrichtung nach dem vorhergehenden Anspruch, **dadurch gekennzeichnet, dass** die Mittel (850) zur Trennung der vorderen Komponente eine Bahnabweichung zwischen den zwei Komponenten vor der ersten Flüssigkristallzelle (200) induzieren, und dass die Mittel zur Kombination der zwei Komponenten vorgesehen sind, um diese Bahnabweichung zu kompensieren.

9. Umlenkeinrichtung nach einem der vorhergehenden Ansprüche, **dadurch gekennzeichnet, dass** mindestens eine Flüssigkristallzelle (200, 300) Elektroden (510, 580) aufweist, die je von zwei Metallschichten gebildet werden, die zweimal geätzt sind.

10. Umlenkeinrichtung nach einem der vorhergehenden Ansprüche, **dadurch gekennzeichnet, dass** sie umfasst:

   - eine konvergierende optische Baueinheit (113), die in Überdeckung der ersten Flüssigkristallzelle (200) angeordnet ist und deren Brennpunkt, der im Verhältnis zur Bahn des Lichts in der Umlenkeinrichtung definiert ist, sich in der Nähe der Ebene der zweiten Flüssigkristallzelle (300) befindet,
   - Mittel (390), die mehrere unterschiedliche optische Dämpfungen erzeugen, die an die verschiedenen Ausgangskanäle angewendet werden, die der zweiten Flüssigkristallzelle (300) benachbart sind, wobei diese Dämpfungen in Abhängigkeit von diesen verschiedenen Kanälen verteilt sind, wobei jede Dämpfung eines betrachteten Ausgangskanals als nicht von dem Eingangskanal abhängig angesehen wird, der momentan dem betrachteten Ausgangskanal optisch zugeordnet ist.

11. Umlenkeinrichtung nach Anspruch 10, **dadurch gekennzeichnet, dass** die zweite Flüssigkristallzelle (300) ebenfalls mit einer konvergierenden optischen Baueinheit (413) versehen ist, deren Brennpunkt sich in der Nähe der ersten Flüssigkristallzelle (200) befindet, und dass die erste Flüssigkristallzelle (200) mit Mitteln (290) versehen ist, die mehrere unterschiedliche optische Dämpfungen erzeugen, die an die verschiedenen Eingangskanäle angewendet werden, die dieser ersten Flüssigkristallzelle (200) benachbart sind, wobei diese Dämpfungen in Abhängigkeit von diesen verschiedenen Kanälen verteilt sind, wobei jede Dämpfung eines betrachteten Eingangskanals nicht von dem Ausgangskanal abhängt, der momentan dem betrachteten Eingangskanal optisch zugeordnet ist.

12. Umlenkeinrichtung nach Anspruch 10 oder Anspruch 11, **dadurch gekennzeichnet, dass** die oder eine der konvergierenden optischen Baueinheiten (113, 413) aus einer konvergierenden Linse besteht/bestehen, die eine Zelle (200, 300) überdeckt und deren Brennpunkt sich in der Nähe der entgegengesetzten Zelle befindet.

## FIG.1

## FIG.2

# FIG.3

# FIG.4

# FIG.5

EP 1 292 858 B1

*FIG.6*

# FIG.7

EP 1 292 858 B1